# EUROPEAN PATENT APPLICATION

(11) **EP 4 471 405 A1**
(43) Date of publication of application: **04.12.2024**
(21) Application number: 24178627.6
(22) Date of filing: 28.05.2024
(51) Int. Cl.: G01N 21/3563, B01D 46/00, G01N 21/94

(54) **AIR FILTER REMAINING LIFE PREDICTION**

(30) Priority: 31.05.2023 US 202363505063 P
(71) Applicant: Vertiv Corporation, Westerville, OH 43082 (US)
(72) Inventor: VAN FOSSEN, John, Powell, 43065 (US)
(74) Representative: Bryn-Jacobsen, Caelia

(57) **Abstract**

A method of predicting a remaining life of a filter can include transmitting light toward the filter, taking a measurement of light reflected from the filter, adding the measurement to a database, predicting the remaining life of the filter using the database, displaying the remaining life of the filter, or any combination thereof. The light can include infrared light.

## Description

### CROSS-REFERENCE TO RELATED APPLICATIONS

This application claims the benefit of U.S. Provisional Patent Application No. 63/505,063 filed May 31, 2023,.

### TECHNICAL FIELD

The present disclosure relates generally to air filters and more specifically relates to predicting the remaining life of air filters.

### BACKGROUND

Description of the Related Art. Air filters are commonly used in electronics cabinets. For example, such filters can be used to filter incoming air, such as cooling air. As such filters build up debris, less air is passed therethrough. Thus, such filters need to be changed and/or cleaned to provide maximum flow of cooling air to the electronics within the cabinet.

Air filters are commonly changed on set intervals. However, changing filters at set intervals may cause the filters to be changed too frequently or not soon enough, which can result in added cost and complexity for preventative maintenance as well as a possible negative impact to product lifetime.

### SUMMARY

The present disclosure provides devices, systems and methods for predicting a remaining life of a filter, such as an air filter. In at least one example, a method of predicting a remaining life of a filter can include transmitting light toward the filter, taking a measurement of light reflected from the filter, adding the measurement to a database, predicting the remaining life of the filter using the database, displaying the remaining life of the filter, or any combination thereof. In at least one example, transmitting light toward the filter can include transmitting infrared light toward the filter.

In at least one example, taking the measurement can be performed periodically. In at least one example, the database can include at least a current measurement and a previous measurement. In at least one example, predicting the remaining life of the filter can include determining a slope between the current measurement and the previous measurement. In at least one example, predicting the remaining life of the filter can include determining the remaining life based on the slope. In at least one example, a method of predicting a remaining life of a filter can include updating a period at which the measurement is taken based on the slope.

In at least one example, the database can include at least a first measurement, a second measurement, and a current measurement. In at least one example, predicting the remaining life of the filter can include determining a first slope between the first measurement and the second measurement and a second slope between the second measurement and the current measurement. In at least one example, predicting the remaining life of the filter can include determining the remaining life based on a difference between the first slope and the second slope. In at least one example, a method of predicting a remaining life of a filter can include updating a period at which the measurement is taken based on a difference between the first slope and the second slope.

In at least one example, a method of predicting a remaining life of a filter can include comparing the measurement of the reflected light with an alarm limit and/or a warning limit. In at least one example, a method of predicting a remaining life of a filter can include providing an alarm if the measurement of the reflected light is above the alarm limit. In at least one example, a method of predicting a remaining life of a filter can include providing a warning if the measurement of the reflected light is above the warning limit and below the alarm limit.

In at least one example, a method of predicting a remaining life of a filter can include comparing the measurement of the reflected light with a previous measurement of the reflected light stored in the database. In at least one example, a method of predicting a remaining life of a filter can include prompting a user to indicate whether the filter has been changed, such as if the measurement of the reflected light is lower than a previous measurement of the reflected light stored in the database. In at least one example, a method of predicting a remaining life of a filter can include receiving an indication of whether the filter has been changed. In at least one example, a method of predicting a remaining life of a filter can include logging, if the filter has been changed, a change date and/or time in the database, resetting the remaining life of the air filter, evaluating the accuracy of the remaining life of the filter, revising a prediction model based upon a difference between the remaining life of the filter and an actual in-service life of the filter, or any combination thereof.

In at least one example, a system for predicting a remaining life of an air filter can include a light transmitter configured to transmit light toward the air filter, a light receiver configured to receive light reflected from the air filter, a controller coupled to the transmitter and the receiver, a display coupled to the controller and configured to display the remaining life of the air filter as determined by the controller, or any combination thereof. In at least one example, the controller can periodically take a measurement of the light reflected from the air filter using the receiver, store the measurement in a database, determine the remaining life of the filter by comparing the measurement with a previous measurement, or any combination thereof. In at least one example, the controller can determine a slope between the measurement and the previous measurement and/or change a periodic rate at which the controller takes the measurement based on the slope.

### BRIEF DESCRIPTION OF THE DRAWINGS

The disclosure will be readily understood by the following detailed description in conjunction with the accompanying drawings, wherein like reference numerals designate like elements:
FIG. 1 is a simplified diagram of one of many examples of a system for predicting a remaining life of a filter according to the disclosure.
FIG. 2 is a diagram of one of many examples of a system for predicting a remaining life of a filter according to the disclosure.
FIG. 3 is a flow chart of one of many examples of a method for predicting a remaining life of a filter according to the disclosure.
FIG. 4 is a plot used and/or created by one of many examples of a system and/or method for predicting a remaining life of a filter according to the disclosure.

### DETAILED DESCRIPTION

The figures described above and the written description of specific structures and functions below are not presented to limit the scope of what Applicant has invented or the scope of the appended claims. Rather, the figures and written description are provided to teach any person skilled in the art to make and use the inventions for which patent protection is sought. Those skilled in the art will appreciate that not all features of a commercial example of the inventions are described or shown for the sake of clarity and understanding. Persons of skill in this art will also appreciate that the development of an actual commercial example incorporating aspects of the present inventions will require numerous implementation-specific decisions to achieve the developer's ultimate goal for the commercial example. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood that the inventions disclosed and taught herein are susceptible to numerous and various modifications and alternative forms.

The use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the figures and are not intended to limit the scope of the inventions or the appended claims. The terms "including" and "such as" are illustrative and not limitative. The terms "couple," "coupled," "coupling," "coupler," and like terms are used broadly herein and can include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and can further include without limitation integrally forming one functional member with another in a unity fashion. The coupling can occur in any direction, including rotationally. Further, all parts and components of the disclosure that are capable of being physically embodied inherently include imaginary and real characteristics regardless of whether such characteristics are expressly described herein, including but not limited to characteristics such as axes, ends, inner and outer surfaces, interior spaces, tops, bottoms, sides, boundaries, dimensions (e.g., height, length, width, thickness), mass, weight, volume and density, among others.

Any process flowcharts discussed herein illustrate the operation of possible implementations of systems, methods, and computer program products according to various examples of the present disclosure. In this regard, each block in a flowchart may represent a module, segment, or portion of code, which can include one or more executable instructions for implementing the specified logical function(s). It should also be noted that, in some implementations, the function(s) noted in the block(s) might occur out of the order depicted in the figures. For example, blocks shown in succession may, in fact, be executed substantially concurrently. It will also be noted that each block of a flowchart illustration can be implemented by special purpose hardware-based systems that perform the specified functions or acts, or combinations of special purpose hardware and computer instructions.

Applicant has created new and useful devices, systems and methods for predicting a remaining life of a filter, such as an air filter. In at least one example, a method according to the disclosure, such as a method of predicting a remaining life of a filter, can include transmitting light towards a filter, taking a measurement of light reflected from the filter, adding the measurement to a database, predicting the remaining life of the filter using the database, and displaying the remaining life of the filter.

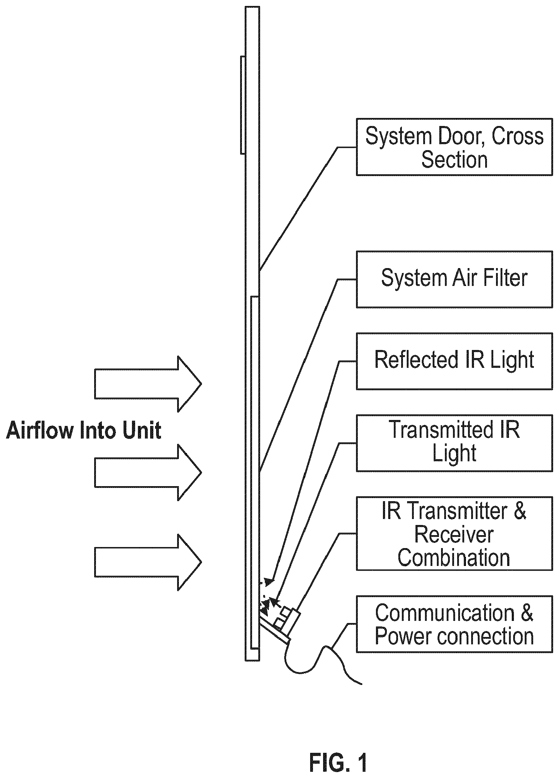

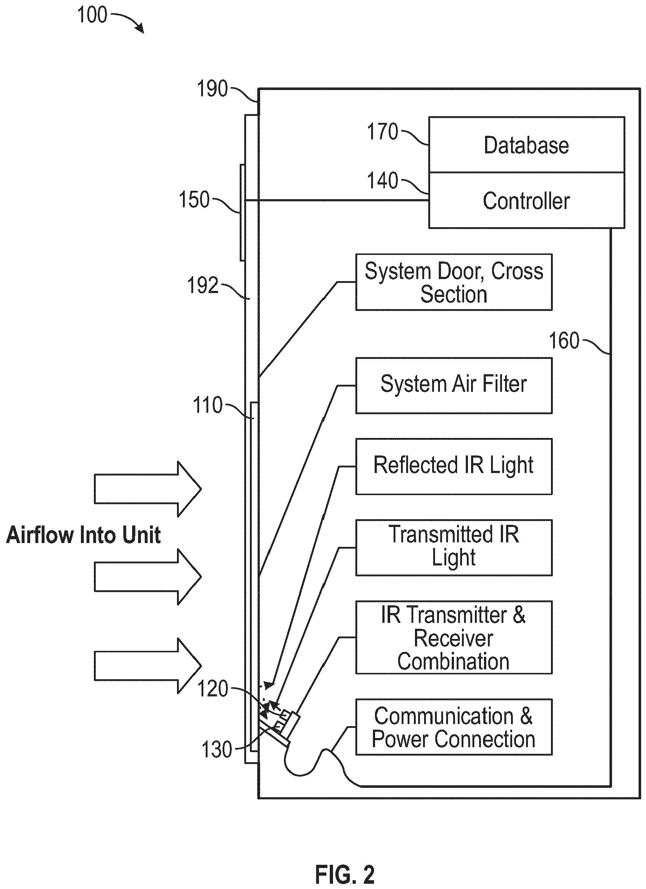

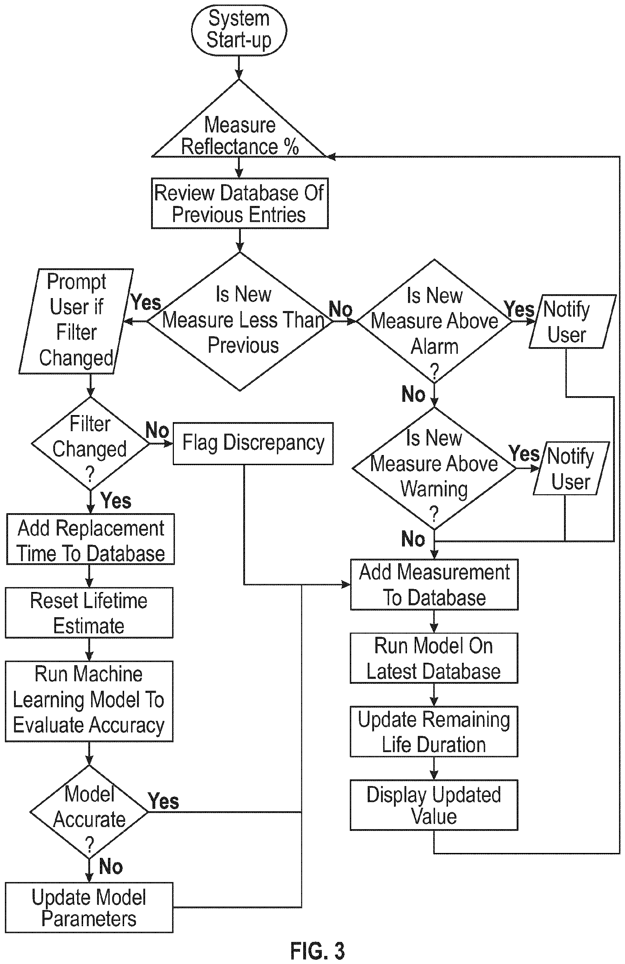

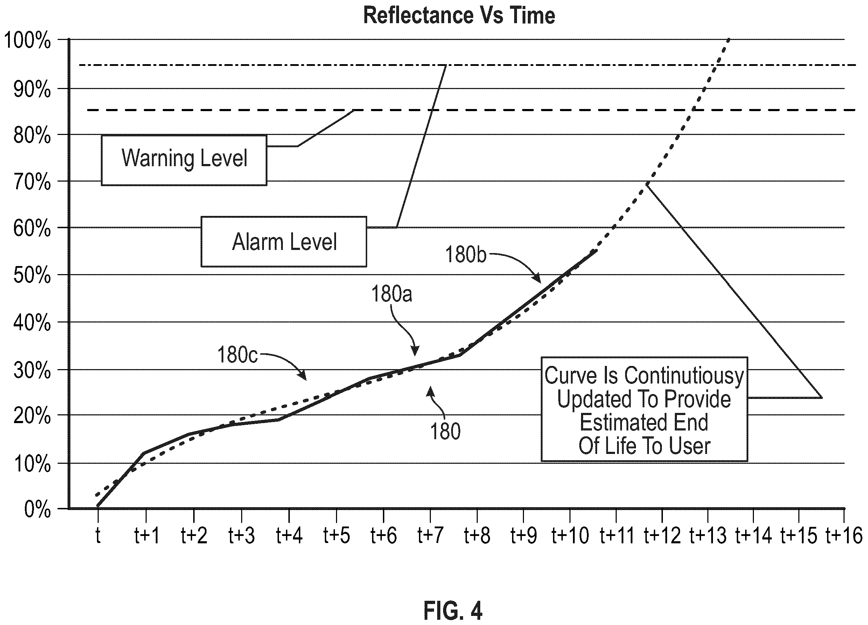

FIG. 1 is a simplified diagram of one of many examples of a system for predicting a remaining life of a filter according to the disclosure. FIG. 2 is a diagram of one of many examples of a system for predicting a remaining life of a filter according to the disclosure. FIG. 3 is a flow chart of one of many examples of a method for predicting a remaining life of a filter according to the disclosure. FIG. 4 is a plot used and/or created by one of many examples of a system and/or method for predicting a remaining life of a filter according to the disclosure. FIGS. 1-4 are described in conjunction with one another.

In at least one example, a system 100 for predicting a remaining life of an air filter 110 can include a light transmitter 120 configured to transmit light toward the air filter 110, a light receiver 130 configured to receive light reflected from the air filter 110, a controller 140 coupled to the transmitter 120 and the receiver 130, a display 150 coupled to the controller 140, such as through cabling 160, and configured to display the remaining life of the air filter as determined by the controller 140, or any combination thereof. In at least one example, the controller 140 can be coupled to the transmitter 120, the receiver 130, the display 150, or any combination thereof through cabling 160. In at least one example, the controller 140 can periodically take a measurement of the light reflected from the air filter 110 using the receiver 130, store the measurement in a database 170, determine the remaining life of the air filter 120 by comparing the measurement with a previous measurement, or any combination thereof. In at least one example, the controller 140 can determine a slope 180 between the measurement and the previous measurement and/or change a periodic rate at which the controller 140 takes the measurement based on the slope.

In at least one example, a system 100 for predicting a remaining life of an air filter 110 can be mounted to, such as within, a cabinet 190, such as for housing electronic equipment, such as computing and/or networking devices. In at least one example, a system 100, or a portion thereof, can be mounted to a door 192 of the cabinet 190.

In at least one example, a method of predicting a remaining life of a filter 110 can include transmitting light toward the filter 110, taking a measurement of light reflected from the filter 110, adding the measurement to a database 170, predicting the remaining life of the filter 110 using the database 170, displaying the remaining life of the filter 110, or any combination thereof. In at least one example, transmitting light toward the filter 110 can include transmitting infrared light toward the filter 110.

In at least one example, transmitting light toward the filter 110 and/or taking the measurement can be performed periodically. In at least one example, the database 170 can include at least a current measurement and a previous measurement. In at least one example, predicting the remaining life of the filter 110 can include determining a slope 180 between the current measurement and the previous measurement. In at least one example, predicting the remaining life of the filter 110 can include determining the remaining life based on the slope 180. In at least one example, a method of predicting a remaining life of a filter 110 can include updating a period at which the measurement is taken based on the slope 180.

In at least one example, the database 170 can include a plurality of measurements, such as a first measurement, a second measurement, and a current measurement. In at least one example, predicting the remaining life of the filter 110 can include determining a first slope 180a between the first measurement and the second measurement and a second slope 180b between the second measurement and the current measurement. In at least one example, predicting the remaining life of the filter 110 can include determining the remaining life based on a difference between the first slope 180a and the second slope 180b. In at least one example, a method of predicting a remaining life of a filter can include updating a period at which the measurement is taken based on a difference between the first slope 180a and the second slope 180b. In at least one example, a method of predicting a remaining life of a filter can include approximating and/or updating/revising a curve based on a number of slopes, such as slopes 180a, 180b, 180c, determined by taking successive and/or periodic measurements of the light reflected from the air filter 110, which can be stored in the database 170. In at least one example, such a curve can be used as a prediction model for determining the remaining life of the filter 110.

In at least one example, a method of predicting a remaining life of a filter 110 can include comparing the measurement of the reflected light with an alarm limit and/or a warning limit. In at least one example, a method of predicting a remaining life of a filter 110 can include providing an alarm if the measurement of the reflected light is above the alarm limit. In at least one example, a method of predicting a remaining life of a filter 100 can include providing a warning if the measurement of the reflected light is above the warning limit and below the alarm limit. In at least one example, a method of predicting a remaining life of a filter 110 can include predicting and/or displaying when the system 100 will reach the warning limit and/or the alarm limit. By displaying when the remaining useful life of the filter 110 will expire, and/or the warning limit and/or the alarm limit will be reached, a user can plan ahead for filter changes, thereby permitting the scheduling of preventative maintenance and/or aiding logistics management.

In at least one example, a method of predicting a remaining life of a filter 110 can include comparing the measurement of the reflected light with a previous measurement of the reflected light stored in the database 170. In at least one example, a method of predicting a remaining life of a filter 110 can include prompting a user to indicate whether the filter 110 has been changed, such as if the measurement of the reflected light is lower than a previous measurement of the reflected light stored in the database 170. In at least one example, a method of predicting a remaining life of a filter 110 can include receiving an indication of whether the filter 110 has been changed. In at least one example, a method of predicting a remaining life of a filter 110 can include logging, if the filter 110 has been changed, a change date and/or time in the database 170, resetting the remaining life of the filter 110, evaluating the accuracy of the remaining life of the filter 110, revising a prediction model based upon a difference between the remaining life of the filter 110 and an actual in-service life of the filter 110, or any combination thereof.

In at least one example, a method of predicting a remaining life of a filter can include transmitting light toward the filter, taking a measurement of light reflected from the filter, adding the measurement to a database, predicting the remaining life of the filter using the database, displaying the remaining life of the filter, or any combination thereof. In at least one example, transmitting light toward the filter can include transmitting infrared light toward the filter.

In at least one example, taking the measurement can be performed periodically. In at least one example, the database can include at least a current measurement and a previous measurement. In at least one example, predicting the remaining life of the filter can include determining a slope between the current measurement and the previous measurement. In at least one example, predicting the remaining life of the filter can include determining the remaining life based on the slope. In at least one example, a method of predicting a remaining life of a filter can include updating a period at which the measurement is taken based on the slope.

In at least one example, the database can include at least a first measurement, a second measurement, and a current measurement. In at least one example, predicting the remaining life of the filter can include determining a first slope between the first measurement and the second measurement and a second slope between the second measurement and the current measurement. In at least one example, predicting the remaining life of the filter can include determining the remaining life based on a difference between the first slope and the second slope. In at least one example, a method of predicting a remaining life of a filter can include updating a period at which the measurement is taken based on a difference between the first slope and the second slope.

In at least one example, a method of predicting a remaining life of a filter can include comparing the measurement of the reflected light with an alarm limit and/or a warning limit. In at least one example, a method of predicting a remaining life of a filter can include providing an alarm if the measurement of the reflected light is above the alarm limit. In at least one example, a method of predicting a remaining life of a filter can include providing a warning if the measurement of the reflected light is above the warning limit and below the alarm limit.

In at least one example, a method of predicting a remaining life of a filter can include comparing the measurement of the reflected light with a previous measurement of the reflected light stored in the database. In at least one example, a method of predicting a remaining life of a filter can include prompting a user to indicate whether the filter has been changed, such as if the measurement of the reflected light is lower than a previous measurement of the reflected light stored in the database. In at least one example, a method of predicting a remaining life of a filter can include receiving an indication of whether the filter has been changed. In at least one example, a method of predicting a remaining life of a filter can include logging, if the filter has been changed, a change date and/or time in the database, resetting the remaining life of the air filter, evaluating the accuracy of the remaining life of the filter, revising a prediction model based upon a difference between the remaining life of the filter and an actual in-service life of the filter, or any combination thereof.

In at least one example, a system for predicting a remaining life of an air filter can include a light transmitter configured to transmit light toward the air filter, a light receiver configured to receive light reflected from the air filter, a controller coupled to the transmitter and the receiver, a display coupled to the controller and configured to display the remaining life of the air filter as determined by the controller, or any combination thereof. In at least one example, the controller can periodically take a measurement of the light reflected from the air filter using the receiver, store the measurement in a database, determine the remaining life of the filter by comparing the measurement with a previous measurement, or any combination thereof. In at least one example, the controller can determine a slope between the measurement and the previous measurement and/or change a periodic rate at which the controller takes the measurement based on the slope.

Other and further examples utilizing one or more aspects of the disclosure can be devised without departing from the Applicant's disclosure. For example, the devices, systems and methods can be implemented for numerous different types and sizes in numerous different industries. Further, the various methods and examples of the devices, systems and methods can be included in combination with each other to produce variations of the disclosed methods and examples. Discussion of singular elements can include plural elements and vice versa. The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.

Further examples are set out in the clauses below:
1.A method of predicting a remaining life of a filter, the method comprising:
   transmitting light toward the filter;
   taking a measurement of light reflected from the filter;
   adding the measurement to a database;
   predicting the remaining life of the filter using the database; and
   displaying the remaining life of the filter.
2.The method of clause 1, wherein transmitting light toward the filter comprises transmitting infrared light toward the filter.
3.The method of clause 1 or 2, wherein the database includes at least a current measurement and a previous measurement.
4.The method of clause 3, wherein predicting the remaining life of the filter comprises determining a slope between the current measurement and the previous measurement.
5.The method of clause 4, wherein predicting the remaining life of the filter comprises determining the remaining life based on the slope.
6.The method of clause 4, wherein taking the measurement is performed periodically, and further including updating a period at which the measurement is taken based on the slope.
7.The method of any one of the preceding clauses, wherein the database includes at least a first measurement, a second measurement, and a current measurement.
8. The method of clause 7, wherein predicting the remaining life of the filter comprises determining a first slope between the first measurement and the second measurement and a second slope between the second measurement and the current measurement.
9.The method of clause 8, wherein predicting the remaining life of the filter comprises determining the remaining life based on a difference between the first slope and the second slope.
10.The method of clause 8, wherein taking the measurement is performed periodically, and further comprising updating a period at which the measurement is taken based on a difference between the first slope and the second slope.
11.The method of any one of the preceding clauses, further comprising comparing the measurement of the reflected light with an alarm limit and providing an alarm if the measurement of the reflected light is above the alarm limit.
12.The method of clause 11, further comprising comparing the measurement of the reflected light with a warning limit and providing a warning if the measurement of the reflected light is above the warning limit and below the alarm limit.
13.The method of any one of the preceding clauses, further comprising comparing the measurement of the reflected light with a previous measurement of the reflected light stored in the database.
14.The method of clause 13, further comprising prompting a user to indicate whether the filter has been changed and receiving an indication of whether the filter has been changed.
15.The method of clause 14, further comprising logging, if the filter has been changed, a change date in the database.
16.The method of clause 14, further comprising, if the filter has been changed, logging a change time in the database;
   evaluating the accuracy of the remaining life of the filter; and
   resetting the remaining life of the filter.
17.The method of clause 14, further comprising revising, if the filter has been changed, a prediction model based upon a difference between the remaining life of the filter and an actual in-service life of the filter.
18.A system for predicting a remaining life of an air filter, comprising:
   a light transmitter configured to transmit light toward the air filter;
   a light receiver configured to receive light reflected from the air filter;
   a controller coupled to the transmitter and the receiver, the controller configure to periodically take a measurement of the light reflected from the air filter using the receiver, store the measurement in a database, and determine the remaining life of the air filter by comparing the measurement with a previous measurement; and a display coupled to the controller and configured to display the remaining life of the air filter as determined by the controller.
19.The system of clause 18, wherein the controller is configured to determine a slope between the measurement and the previous measurement.
20.The system of clause 19, wherein the controller is configured to change a periodic rate at which the controller takes the measurement based on the slope.

The inventions have been described in the context of preferred and other examples and not every example of the inventions has been described. Obvious modifications and alterations to the described examples are available to those of ordinary skill in the art having the benefits of the present disclosure. The disclosed and undisclosed examples are not intended to limit or restrict the scope or applicability of the inventions conceived of by the Applicant, but rather, in conformity with the patent laws, Applicant intends to fully protect all such modifications and improvements that come within the scope or range of equivalents of the following claims.

## Claims

1. A method of predicting a remaining life of a filter, the method comprising:
transmitting light toward the filter;
taking a measurement of light reflected from the filter;
adding the measurement to a database;
predicting the remaining life of the filter using the database; and
displaying the remaining life of the filter.

2. The method of claim 1, wherein transmitting light toward the filter comprises transmitting infrared light toward the filter.

3. The method of claim 1 or 2, wherein the database includes at least a current measurement and a previous measurement.

4. The method of claim 3, wherein predicting the remaining life of the filter comprises determining a slope between the current measurement and the previous measurement.

5. The method of claim 4, wherein predicting the remaining life of the filter comprises determining the remaining life based on the slope; or optionally
wherein taking the measurement is performed periodically, and further including updating a period at which the measurement is taken based on the slope.

6. The method of any one of the preceding claims, wherein the database includes at least a first measurement, a second measurement, and a current measurement.

7. The method of claim 6, wherein predicting the remaining life of the filter comprises determining a first slope between the first measurement and the second measurement and a second slope between the second measurement and the current measurement.

8. The method of claim 7, wherein predicting the remaining life of the filter comprises determining the remaining life based on a difference between the first slope and the second slope; or optionally
wherein taking the measurement is performed periodically, and further comprising updating a period at which the measurement is taken based on a difference between the first slope and the second slope.

9. The method of any one of the preceding claims, further comprising comparing the measurement of the reflected light with an alarm limit and providing an alarm if the measurement of the reflected light is above the alarm limit.

10. The method of claim 9, further comprising comparing the measurement of the reflected light with a warning limit and providing a warning if the measurement of the reflected light is above the warning limit and below the alarm limit.

11. The method of any one of the preceding claims, further comprising comparing the measurement of the reflected light with a previous measurement of the reflected light stored in the database.

12. The method of claim 11, further comprising prompting a user to indicate whether the filter has been changed and receiving an indication of whether the filter has been changed.

13. The method of claim 12, further comprising logging, if the filter has been changed, a change date in the database; or optionally
further comprising, if the filter has been changed,
logging a change time in the database;
evaluating the accuracy of the remaining life of the filter; and
resetting the remaining life of the filter; or optionally
further comprising revising, if the filter has been changed, a prediction model based upon a difference between the remaining life of the filter and an actual in-service life of the filter.

14. A system for predicting a remaining life of an air filter, comprising:
a light transmitter configured to transmit light toward the air filter;
a light receiver configured to receive light reflected from the air filter;
a controller coupled to the transmitter and the receiver, the controller configured to periodically take a measurement of the light reflected from the air filter using the receiver, store the measurement in a database, and determine the remaining life of the air filter by comparing the measurement with a previous measurement; and
a display coupled to the controller and configured to display the remaining life of the air filter as determined by the controller.

15. The system of claim 18, wherein the controller is configured to determine a slope between the measurement and the previous measurement; and optionally
wherein the controller is configured to change a periodic rate at which the controller takes the measurement based on the slope.
